(19) Europäisches Patentamt
European Patent Office
Office européen des brevets

(11) **EP 1 893 853 B1**

(12) **EUROPÄISCHE PATENTSCHRIFT**

(45) Veröffentlichungstag und Bekanntmachung des Hinweises auf die Patenterteilung:
**11.11.2009 Patentblatt 2009/46**

(21) Anmeldenummer: **06743185.8**

(22) Anmeldetag: **23.06.2006**

(51) Int Cl.:
***F01N 3/28*** (2006.01)

(86) Internationale Anmeldenummer:
**PCT/EP2006/006054**

(87) Internationale Veröffentlichungsnummer:
**WO 2006/136431 (28.12.2006 Gazette 2006/52)**

(54) **VERFAHREN ZUM BETRIEB EINER PARTIKELFALLE SOWIE VORRICHTUNG ZUR DURCHFÜHRUNG DES VERFAHRENS**

METHOD FOR OPERATING A PARTICULATE TRAP AND DEVICE FOR CARRYING OUT SAID METHOD

PROCEDE PERMETTANT DE FAIRE FONCTIONNER UN PIEGE A PARTICULES, ET DISPOSITIF POUR LA MISE EN OEUVRE DE CE PROCEDE

(84) Benannte Vertragsstaaten:
**DE ES FR GB IT PL**

(30) Priorität: **24.06.2005 DE 102005029338**

(43) Veröffentlichungstag der Anmeldung:
**05.03.2008 Patentblatt 2008/10**

(73) Patentinhaber:
• **Emitec Gesellschaft für Emissionstechnologie mbH**
 **53797 Lohmar (DE)**
• **Toyota Motor Corporation**
 **Toyota-shi, Aichi 471-8571 (JP)**

(72) Erfinder:
• **MAUS, Wolfgang**
 **51429 Bergisch Gladbach (DE)**
• **BRÜCK, Rolf**
 **51429 Bergisch Gladbach (DE)**

(74) Vertreter: **Rössler, Matthias**
 **KNH Patentanwälte**
 **Kahlhöfer Neumann Herzog Fiesser**
 **Karlstrasse 76**
 **40210 Düsseldorf (DE)**

(56) Entgegenhaltungen:
EP-A- 1 512 860          DE-A1- 10 222 762
DE-U1- 20 117 873        US-A1- 2003 106 309
US-A1- 2004 035 101

**EP 1 893 853 B1**

**Beschreibung**

Die vorliegende Erfindung betrifft ein Verfahren zum Betrieb einer, insbesondere offenen, Partikelfalle in einer Abgasanlage einer Verbrennungskraftmaschine. Weiter wird auch eine Vorrichtung zur Durchführung des Verfahrens beschrieben. Das Verfahren und die Vorrichtung finden bevorzugt im Automobilbereich Anwendung.

Das von einer Verbrennungskraftmaschine erzeugte Abgas umfasst neben Gasbestandteilen vielfach auch feste Partikel, die nicht oder nur in limitiertem Umfang an die Umgebung abgegeben werden sollen. Zu diesem Zweck ist es bekannt, das Abgas durch einen Filter hindurchzuführen, wobei die darin enthaltenen Partikel in einer porösen Wandstruktur zumindest zeitweise aufgehalten werden. Um ein völliges Verstopfen der Wandstruktur zu verhindern, müssen solche Filter wiederholt regeneriert werden. Während einer solchen Regeneration werden die Rußpartikel verbrannt. Für das Verbrennen der Partikel müssen Temperaturen oberhalb von ca. 600˚C bereitgestellt werden. Dies kann durch kurzzeitige Temperaturerhöhung des Filters bzw. des Abgases und/oder durch Zugabe von Additiven erfolgen. Für eine solche Regeneration ist es beispielsweise bekannt, mittels des Motormanagements eine Lastpunktverschiebung des Motors vorzunehmen, so dass deutlich heißeres Abgas den Filter erreicht. Es ist auch möglich, durch Aussetzen einer Zündung in einem Zylinder des Motors, eine Kraftstoffmenge dem Abgassystem zuzuführen, so dass eine erhöhte Konzentration von ungesättigten Kohlenwasserstoffen auf einen Katalysator trifft. Beim Kontakt mit dem Katalysator tritt eine Verbrennung ein, die zu der gewünschten Erhöhung der Abgastemperatur im Filter führt. Solche Regenerationsverfahren sind jedoch in der Regel mit einem höheren Kraftstoffverbrauch und deutlich höheren Belastungen des Filters verbunden.

Neben den vorstehend genannten Filtern, die wechselseitig verschlossene Kanäle aufweisen und somit sicherstellen, dass die gesamte Abgasmenge durch die Wände des Filters hindurchströmt, sind noch andere Vorrichtungen zum Aufhalten von Partikeln eines Abgasstromes bekannt. Dabei ist insbesondere auf die so genannte "offene" Partikelfalle hinzuweisen. Eine solche "offene" Partikelfalle zeichnet sich dadurch aus, dass in ihr Strömungswege bzw. Kanäle existieren, die dem Abgas ermöglichen, die Partikelfalle zu durchströmen, ohne durch das die Strömungswände zumindest teilweise begrenzende Filtermaterial zu strömen. Als Beispiel für eine solche offene Partikelfalle ist das deutsche Gebrauchsmuster DE 201 17 873 zu nennen, da hier eine Vielzahl von Parametern einer solchen Partikelfalle angegeben sind.

Im Gegensatz zu dem geschlossenen Filter, der stets eine relativ konstante Effektivität aufweist, weil alle Partikel durch die Filterwände hindurchströmen müssen, variiert die Effektivität der offenen Partikelfalle. Mit Effektivität ist in diesem Zusammenhang das Verhältnis aus aufgehaltenen Partikel zu den eintretenden Partikeln gemeint ($E = P_{aufgehalten}/P_{eingeströmt}$). Werden also alle Partikel aufgehalten, so liegt die Effektivität bei 100%, werden nur zwei Drittel der Partikel aufgehalten und der Rest tritt wieder aus, so beträgt die Effektivität 67 %.

Bei offenen Partikelfallen wird die Effektivität maßgeblich von den Drückverhältnissen im Inneren und der Umgebung der Partikelfalle bestimmt. Dabei ist zu berücksichtigen, dass sich mit zunehmender Betriebsdauer Partikel in bzw. an dem Filtermaterial ansammeln, wobei die durchströmbaren Poren bzw. Hohlräume des Filtermaterials zumindest verringert bzw. verkleinert werden. Damit steigt die Druckdifferenz bezüglich benachbarter Kanäle, was zur Folge hat, dass mit länger andauernder Betriebsdauer die anströmenden Partikel in zunehmendem Maße die freien Strömungswege hin zur Umgebung wählen und nicht mehr aufgefangen werden. Damit sinkt die Effektivität.

Die US-A1-2003/0106309 offenbart ein Verfahren zum Betrieb einer Partikelfalle in einer Abgasanlage einer Verbrennungskraftmaschine, wobei die Regeneration der Partikelfalle bei niedrigen Temperaturen stattfindet, so dass keine thermische Regeneration der Partikel vorgenommen wird.

Die EP-A-1 512 860 beschreibt ein Abgasreinigungssystem, wobei die Regeneration eines Diesel-Partikelfilters durch die kontrollierte Abgastemperaturerhöhung infolge einer angepassten Treibstoffeinspritzung erreicht wird.

Aufgabe der vorliegenden Erfindung ist es, die im Zusammenhang mit dem Stand der Technik beschriebenen Probleme zumindest teilweise zu lindern. Dabei soll insbesondere ein Verfahren zum Betrieb einer offenen Partikelfalle beschrieben werden, das dem beschriebenen Effektivitätsverlust entgegenwirkt. Das Verfahren soll zudem kraftstoffsparend und materialschonend hinsichtlich des eingesetzten Filters sein. Im Übrigen soll auch eine Vorrichtung angegeben werden, die besonders zur Durchführung dieses Verfahrens geeignet ist.

Diese Aufgaben werden gelöst mit einem Verfahren umfassend die Merkmale des Patentanspruchs 1. Besonders vorteilhafte Ausgestaltungen des Verfahrens bzw. eine besonders geeignete Vorrichtung zur Durchführung des Verfahrens werden in den abhängig formulierten Patentansprüchen beschrieben. Es ist darauf hinzuweisen, dass die in den Patentansprüchen einzeln aufgeführten Merkmale in beliebiger, technologisch sinnvoller, Weise miteinander kombiniert werden können, und weitere Ausgestaltungen des Verfahrens bzw. der Vorrichtung beschreiben. Ergänzend kann bei der Beschreibung der Erfindung auch auf die ergänzenden Merkmale bzw. Parameter der Beschreibung zurückgegriffen werden.

Das erfindungsgemäße Verfahren zum Betrieb einer, insbesondere offenen, Partikelfalle in einer Abgasanlage einer Verbrennungskraftmaschine, wobei die Partikelfalle eine Effektivität beim sichtlich der Reinigung eines Abfases aufweist, die sich aus dem Verhältnis aus aufgehaltenen Partikeln zu eintretenden Partikeln ergibt, umfasst zumindest die folgenden Schritte:

a) Bestimmung eines ersten Zeitpunktes der Partikelfalle, bei dem die Partikelfalle einen ersten Effektivitätsgrenzwert unterschreitet,

b) Durchführen einer Effektivitätssteigerung der Partikelfalle durch Einstellen mindestens eines spezifischen Betriebsparameters der Verbrennungskraftmaschine, wobei das von der Verbrennungskraftmaschine erzeugte Abgas im Bereich der Partikelfalle eine so niedrige Temperatur hat, dass im Wesentlichen keine thermische Regeneration der Partikel stattfindet,

c) Bestimmung eines zweiten Zeitpunktes der Partikelfalle, bei dem die Partikelfalle einen zweiten Effektivitätsgrenzwert überschreitet, und

d) Aktivieren eines Normalbetriebs der Verbrennungskraftmaschine,

wobei die Zeitdauer für Schritt b) bestimmt wird in Abhängigkeit von zumindest einem Parameter aus der Gruppe:

- der Temperatur des Abgases während der Effektivitätssteigerung,
- der Stickstoffdioxid-Konzentration des Abgases während der Effektivitätssteigerung,
- der Wasser-Konzentration des Abgases während der Effektivitätssteigerung,
- der Ozon-Konzentration des Abgases während der Effektivitätssteigerung.

Besonders bevorzugt wird dieses Verfahren zum Betrieb einer offenen Partikelfalle eingesetzt, wie sie eingangs bzw. in der DE 201 17 873 beschrieben wurde. Hinsichtlich ihres Einsatzes in der Abgasanlage einer Verbrennungskraftmaschine ist die eines Otto- oder Dieselmotors bevorzugt, wie sie im Automobilbereich anzutreffen sind. Die besondere Eignung einer offen Partikelfalle resultiert daraus, dass hier eine unter Umständen spürbarere Effektivitätssenkung im Verlaufe eines Betriebs auftreten kann, die erfindungsgemäß reduziert bzw. beseitigt werden kann. Gleichwohl ist es grundsätzlich möglich, auch geschlossene Filter in der hier beschriebenen Weise zu betreiben, denn wird eine kraftstoffsparende und materialschonende Konvertierung der eingelagerten Partikel durchgeführt. Nachfolgende Erläuterungen beziehen sich vordergründig auf eine offene Partikelfalle, was jedoch nicht bedeutet, dass das erfindungsgemäße Verfahren zum Betrieb eines offenen Systems begrenzt wäre.

Gemäß Schritt a) wird zunächst einer erster Zeitpunkt bestimmt, bei dem die Effektivität der Partikelfalle unter einen ersten Grenzwert fällt. Dieser erste Effektivitätsgrenzwert ist nicht für alle Anwendungen gleich, sondern z.B. von der Art der Verbrennungskraftmaschine und dem Aufbau der Partikelfalle selbst abhängig, insbesondere von der Geometrie bzw. Ausrichtung der Strömungswege in der Partikelfalle. Die eingangs beschriebenen offenen Partikelfallen weisen in der Regel eine Effektivität von ca. 80 % auf, wenn sie neu sind. Nach einer gewissen Betriebsdauer pendelt sich die Effektivität aufgrund eingelagerten Partikel ungefähr in einem Bereich von 60 % bei Lastkraftwagen und 30 % bei Pkw ein, was immer noch auseichend ist im Hinblick auf die gesetzlichen Limitierungen von Schadstoffen über die nächsten Jahrzehnte. Für die Konvertierung der die Partikelfalle durchströmenden bzw. dort eingelagerten Partikel müssen besondere Umgebungsbedingungen vorliegen, die jedoch üblicherweise während des Betriebes nicht permanent herrschen. Der Fahrzyklus von den Fahrzeug-Betreibern ist z.B. zumindest zeitweise nicht geeignet, diese äußeren Bedingungen sicher zu stellen. Das betrifft unter anderem Kurzstrecken- oder Stadtfahrten. Bei solchen Fahrten wird regelmäßig eine erhöhte Anzahl von Partikeln im Abgas mitgeführt und außerdem liegen unter Umständen Temperaturen vor, die eine Konvertierung von z.B. Ruß in gasförmige Bestandteile nicht unterstützen. Das führt nun dazu, dass sich relativ viele Partikel an bzw. in dem Filtermaterial der offenen Partikelfalle anlagern, was normalerweise einen Abfall der Effektivität zur Folge hat. Sobald diese jedoch einen ersten Effektivitätsgrenzwert unterschritten hat, wird nun erfindungsgemäß eine Effektivitätssteigerung gemäß Schritt b) eingeleitet.

Gemäß Schritt b) erfolgt die Effektivitätssteigerung durch Einstellen mindestens eines spezifischen Betriebsparameters der Verbrennungskraftmaschine. Das bedeutet, dass die Verbrennungskraftmaschine aus ihrem normalen Modus heraus in einen anderen Modus wechselt, der für die Umsetzung in der Partikelfalle günstiger Bedingungen zur Folge hat. Dies erfolgt bevorzugt in einer Weise, dass kein signifikanter Kraftstoffmehrverbrauch erkennbar ist, und die Temperatur des Abgases im Bereich der Partikelfalle unter der für eine thermische Regeneration erforderlichen Grenztemperatur bleibt. Insbesondere überschreitet das Abgas im Bereich der Partikelfalle nicht eine Temperatur von 500 ˚C, ganz besonders bevorzugt von 400 ˚C. Welche spezifischen Betriebsparameter der Verbrennungskraftmaschine hier variiert werden können, um diese Effektivitätssteigerung der Partikelfalle zu bewirken, wird nachfolgen im Detail noch näher erläutert. Die Effektivitätssteigerung führt nun dazu, dass mehr Partikel umgesetzt bzw. aufgehalten werden, als dies beim Normalbetrieb der Verbrennungskraftmaschine der Fall wäre. Bevorzugt werden dabei so viele Partikel umgesetzt, dass der erste Effektivitätsgrenzwert wieder überschritten wird.

Gemäß Schritt c) ist dann ein zweiter Zeitpunkt der Partikelfilter zu bestimmen, bei dem die Partikelfalle einen zweiten Effektivitätsgrenzwert überschreitet. Der zweite Effektivitätsgrenzwert ist bevorzugt größer als der erste Effektivitätsgrenzwert, gegebenenfalls sogar größer als die Effektivität der Partikelfalle im Normalbetrieb. Wenn dieser zweite Effektivitätsgrenzwert überschritten ist, dann wird gemäß Schritt d) der Normalbetrieb der Verbrennungskraftmaschine aktiviert.

Grundsätzlich ist anzumerken, dass der von der Verbrennungskraftmaschine erzeugte Ruß-Massenstrom ($\dot{m}_{Ruß}$) in der Abgasanlage bezüglich dessen Verhalten in einer offenen Partikelfalle ist, nämlich einerseits in den Ruß-Massenstrom, der regeneriert wird ($\dot{m}_{regeneriert}$), den Ruß-Massenstrom, der im Filtermaterial eingelagert wird ($\dot{m}_{eingelagert}$) und den Ruß-Massenstrom, der am Filtermaterial vorbeiströmt und in die Umgebung geleitet wird ($\dot{m}_{bypass}$).

$$(1) \qquad \dot{m}_{Ruß} = \dot{m}_{regeneriert} + \dot{m}_{eingelagert} + \dot{m}_{bypass}$$

Für den Fall, dass bei unveränderten Bedingungen der regenerierte Ruß-Massenstrom ($\dot{m}_{regeneriert}$) gleich bleibt, wird mit zunehmender Beladung der Partikelfalle der eingelagerte Ruß-Massenstrom ($\dot{m}_{eingelagert}$) kleiner. Dies führt automatisch dazu, dass der die Partikelfalle passierende Ruß-Massenstrom ($\dot{m}_{bypass}$) größer wird. Dies zu beseitigen, wird mit Hilfe des vorgeschlagenen Verfahrens ermöglicht, welches besonders energiesparend, materialschonend und im Hinblick auf die Schadstoffumsetzung besonders wirksam ist. Ganz besonders bevorzugt wird das Verfahren im Zusammenhang mit einer offenen Partikelfalle betrieben, welche in der Abgasanlage eines Dieselmotors angeordnet ist.

Weiter wird vorgeschlagen, dass Schritt a) die Bestimmung eines aktuellen Beladungszustandes der Partikelfalle mit Partikeln umfasst. Damit ist insbesondere gemeint, dass sich Kenntnis darüber verschafft wird, wie groß die Menge der Partikel ist, die im Inneren der Partikelfalle gespeichert ist. Mit Partikel sind insbesondere folgende Feststoffe gemeint: Rußpartikel, Asche sowie an diesen Feststoffen haftende Verbrennungsprodukte.

Hier werden vordergründig Rußpartikel betrachtet. Grundsätzlich ist es dabei möglich, dass der Beladungszustand (z.B. quantitativ) direkt bestimmt wird, es ist jedoch auch möglich hierzu in Relation stehende (indirekte) Messwerte bzw. Kenngrößen heranzuziehen. Schritt a) wird zumindest während des Normalbetriebes der Verbrennungskraftmaschine bevorzugt kontinuierlich durchgeführt, unter Umständen kann jedoch auch eine Bestimmung in kurzzeitigen Intervallen sinnvoll sein.

In diesem Zusammenhang ist es besonders vorteilhaft, wenn der aktuelle Beladungszustand berechnet wird. Eine solche Berechnung wird bevorzugt aus den das Abgas bildenden Edukten sowie den äußeren Umgebungsbedingungen im Bereich der Partikelfalle bestimmt. Dabei ist beispielsweise auch die Umsatzrate des Abgases als Funktion des Betriebszustandes der Verbrennungskraftmaschine heranzuziehen. Das heißt mit anderen Worten, dass beispielsweise die Abgaszusammensetzung, insbesondere die Stickoxidbildung, und deren Einfluss auf die Partikel-Beseitigung berücksichtigt wird. Dabei werden jeweils spezifische Umsatzraten durch Reduktion von Stickstoffdioxid verwirklicht. Zur Veranschaulichung soll nachfolgend diese Umsetzung der Rußpartikel durch Stickstoffdioxid näher betrachtet werden, deren chemische Reaktion sich grob durch die nachfolgende Gleichung beschreiben lässt:

$$C + NO_2 \rightarrow CO_2 + \tfrac{1}{2}\, N_2,$$

wobei C für Rußpartikel, $NO_2$ für Stickstoffdioxid, $CO_2$ für Kohlendioxid und $N_2$ für Stickstoff stehen. Die Reaktionsgeschwindigkeit kann mit Hilfe folgender Zusammenhänge veranschaulicht werden:

$$(2) \qquad r' = \frac{1}{A} \cdot \dot{\xi} = \frac{1}{A} \cdot \frac{\dot{\xi}_m}{M_C} = \kappa' \cdot c_{NO_2} = \kappa' \cdot x_{NO_2} \cdot \frac{P_{ges}}{R \cdot T} \qquad \left[\frac{mol}{m^2 s}\right],$$

wobei

| Zeichen | Bezeichnung / Wert | Einheit |
|---|---|---|
| $r'$ | Reaktionsgeschwindigkeit | mol/m$^2$/s |
| $A$ | zugängliche Oberfläche der Rußpartikel | m$^2$ |
| $\dot{\xi}$ | Reaktionslaufzahl | mol/s |
| $\dot{\xi}_m$ | Reaktionslaufzahl (bezogen auf die Masse an Rußpartikeln) | kg/s |
| $M_C$ | molare Masse der Rußpartikel (0,012 g/mol) | kg/mol |

(fortgesetzt)

| Zeichen | Bezeichnung / Wert | Einheit |
|---|---|---|
| $\kappa'$ | Geschwindigkeitskonstante | m/s |
| $C_{NO_2}$ | Konzentration $NO_2$ | mol/m$^3$ |
| $x_{NO_2}$ | Molanteil $NO_2$ | - |
| $P_{ges}$ | Gesamtdruck | N/m$^2$ |
| $R$ | Gaskonstante (8,314 J/mol/K) | J/mol/K |
| $T$ | Temperatur | K |

Hierbei wird eine absolute Oberfläche der Rußpartikel (A) zugrunde gelegt, die sich aus der Anordnung der dispers verteilten Rußpartikel auf der Oberfläche der Partikelfalle ($A_{Partikelfalle}$ bzw. des Filtermaterials der Partikelfalle $A_{Vlies}$), der Beladung der Partikelfalle mit Rußpartikeln ($k_{Ruß}$) sowie einer massenspezifischen Rußpartikeloberfläche ($A'_{spezifisch}$: spezifische Oberfläche der Partikel selbst: für Ruß ca. 350 m$^2$/kg). Dabei hängt die massenspezifische Rußpartikeloberfläche regelmäßig selbst von der vorliegenden Rußpartikelbeladung in der Partikelfalle ab, da sich bei zunehmender Beladung die Rußpartikel überlagern und die massenspezifische Rußpartikeloberfläche abnimmt. Somit ist gemäß der konkreten Ausgestaltung der Partikelfalle und insbesondere bei einer erhöhten Beladung der Partikelfalle mit Rußpartikeln nicht davon auszugehen, dass auch die gesamte Oberfläche der Rußpartikel als Reaktionsfläche für die Reaktionspartner zugänglich ist und somit für die Berechnung herangezogen werden kann. Vielmehr kommt es vor, dass Bereiche der Partikelfalle besser angeströmt und mit Rußpartikeln bzw. Stickstoffdioxid versorgt werden als andere, und/oder durch Aufeinanderschichten der Rußpartikel prinzipiell aktive Bereiche der Rußpartikel verdeckt und somit für Reaktionspartner unzugänglich sind.

Aus diesen Gründen ist regelmäßig von einer für die eingesetzte Partikelfalle beladungs- und bauartabhängigen zugängliche Oberfläche der Rußpartikel (A) auszugehen, die z.B. zwischen einem maximalen Wert (entsprechend bei maximaler Dispersion der Rußpartikel, lineare Zunahme der absoluten Oberfläche der Rußpartikel mit linearer Zunahme an in der Partikelfalle eingelagerten Rußpartikeln) und einem minimalen Wert (konstante absolute Oberfläche der Rußpartikel trotz zunehmender Einlagerung von Rußpartikeln in der Partikelfalle) variieren kann. Diese Zusammenhänge werden mit der folgenden Gleichung beschrieben:

$$(3) \qquad A = A'_{spezifisch} \cdot m_{Ruß} = A'_{spezifisch} \cdot \kappa_{Ruß} \cdot A_{Vlies} \qquad [m^2],$$

wobei

| Zeichen | Bezeichnung / Wert | Einheit |
|---|---|---|
| $A'_{spezifisch}$ | massenspezifische Rußpartikeloberfläche (350.000 m$^2$/kg) | m$^2$/kg |
| $m_{Ruß}$ | in der Partikelfalle eingelagerte Masse an Rußpartikeln | kg |
| $\kappa_{Ruß}$ | Beladung der Partikelfalle mit Rußpartikeln (Rußmasse pro Filterfläche) | kg/m$^2$ |
| $A_{Vlies}$ | Geometrische Filterfläche (hier wird Filterfläche mit Vlies gebildet) | m$^2$ |

Weiterhin ist in Gleichung (2) die Geschwindigkeitskonstante (k') gegeben, die sich wie folgt beschreiben lässt:

$$(4) \qquad \kappa' = \frac{1}{4}\sqrt{\frac{8 \cdot R \cdot T}{\pi \cdot M_{NO2}}} \cdot 1{,}1 \cdot 10^4 \exp(-\frac{49800}{R \cdot T}) \qquad [\frac{m}{s}],$$

wobei

| Zeichen | Bezeichnung / Wert | Einheit |
|---------|---------------------|---------|
| $M_{NO2}$ | molare Masse $NO_2$ (0,046 kg/mol) | kg/mol |

Werden die Sachverhalte aus Gleichung (3) und (4) in (2) eingesetzt, erhält man folgenden Zusammenhang für die massenbezogene Reaktionslaufzahl des Rußes:

$$(5) \qquad \dot{\xi}_m = \kappa'_{\aleph_{NO2}} \cdot \frac{P_{ges}}{R \cdot T} \cdot A'_{spezifisch} \cdot m_{Ruß} \cdot M_C \qquad [\frac{kg}{s}].$$

Mit Hilfe dieses Zusammenhangs sowie der gezeigten Ansätze zur Einlagerung des Rußes lässt sich eine Massenbilanz aufstellen, die es erlaubt, unter Einbeziehung der motorischen Randbedingungen (Partikelkonzentration, Temperatur, Stickstoffdioxidkonzentration, Abgasmassenstrom) sowie der Randbedingungen der Partikelfalle (Länge, Durchmesser, Zelldichte, Filterfläche, Filterdicke, Permeabilität, Filtergeometrie), die zu jedem Zeitpunkt vorliegende Rußbeladung in der Partikelfalle relativ exakt zu bestimmen. Im hier vorliegenden Fall wurden die Reaktionsabläufe mit besonderem Augenmerk auf die $NO_2$-Umwandlung geschildert. Es ist jedoch klar, dass auch andere Einflüsse auf die Verhaltensweise der Partikelfalle zu berücksichtigen sind, wie z.B. der Rußabbrand (beispielsweise infolge einer hohen Motorlast), für die entsprechende Rechenmodelle zur Verfügung gestellt werden können. Somit ist eine gerätetechnisch sehr einfache Methode vorgeschlagen, den Zeitpunkt für die Effektivitätssteigerung der Partikelfalle zu bestimmen.

Damit kann das Verhalten der Partikelfalle relativ genau abgebildet werden, so dass bei einer Bereitstellung der erforderlichen Informationen bzw. Ist-Werte des Abgassystems und/oder der Verbrennungskraftmaschine zu jedem Zeitpunkt bestimmt werden, wie viele Partikel produziert und wie viele Partikel umgesetzt werden. Daraus lässt sich auch der Beladungszustand bestimmen. Somit ist eine gerätetechnisch sehr einfache Methode vorgeschlagen, den Zeitpunkt für die Effektivitätssteigerung der Partikelfalle zu bestimmen.

Gemäß einer weiteren Ausgestaltung des Verfahrens wird vorgeschlagen, dass der aktuelle Beladungszustand anhand einer Druckdifferenz in der Abgasanlage zwischen einer ersten Position vor der Partikelfalle und einer zweiten Position nach der Partikelfalle ermittelt wird. Mit "vor" bzw. "nach" der Partikelfalle ist eine Position gemeint, die sich auf die Erstreckungsrichtung des Abgases bezieht. Das Filtermaterial und die Strömungswege bzw. Kanäle der Partikelfalle stellen einen Strömungswiderstand für das Abgas dar, der einen Druckabfall zur Folge hat. Überwacht man nun die Druckdifferenz über die Partikelfalle, so können Aussagen hinsichtlich des Beladungszustandes gewonnen werden. Es ist darauf hinzuweisen, dass eine solche Überwachung der Druckdifferenz nicht notwendig ist, insbesondere dann nicht, wenn die Berechnungsmethode unter allen Bedingungen eine für das erfindungsgemäße Verfahren ausreichende Genauigkeit hinsichtlich des aktuellen Beladungszustandes liefert. Für den Fall, dass jedoch z.B. als Kontrolle eine Druckdifferenz-Überwachung vorgenommen wird, so ist diese bevorzugt kontinuierlich durchzuführen. Gemäß einer weiteren Ausgestaltung des Verfahrens wird eine Effektivität der Partikelfalle hinsichtlich im Abgas enthaltener Partikel während Schritt b) gegenüber einem Normalbetrieb der Verbrennungskraftmaschine um mindestens 20 % gesteigert. Ganz besonders bevorzugt liegt die Effektivitätssteigerung der Partikelfalle während Schritt b) in einem Bereich von 20 % bis 30 %. Die Zeitdauer, in der die Effektivitätssteigerung vorgenommen wird, wird wesentlich durch die äußeren Umgebungsbedingungen bzw. der Betriebsweise der Verbrennungskraftmaschine (z.B. dem Fahrzyklus) bestimmt. Es ist nicht unüblich, dass Schritt b) über eine Zeitdauer von mehreren Minuten aufrechterhalten wird, beispielsweise über mehr als 10 oder 30 Minuten, gegebenenfalls sogar länger als 60 Minuten. Die Steigerung der Effektivität wird solange durchgeführt, bis wieder ausreichend freie Filterfläche vorhanden ist, so dass Verhältnis der herrschenden Druckunterschiede hinsichtlich des Durchtretens des Filtermaterials einerseits und hinsichtlich des ungefilterten Ausströmens in die Umgebung andererseits ausreichend klein ist.

Weiter wird auch vorgeschlagen, dass die Zeitdauer für Schritt b) in Abhängigkeit von dem zugrunde liegenden Beladungszustand bestimmt wird. Damit ist insbesondere gemeint, dass in Abhängigkeit der in der Partikelfalle gespeicherten Menge an Partikeln die Effektivitätssteigerung gemäß Schritt b) unterschiedlich lang anhält. Insbesondere heißt das, dass der Schritt b) bei einer größeren Partikelmenge in der Partikelfalle über einen längeren Zeitraum durchgeführt wird.

Es ist erfindungsgemäß vorgesehen, dass die Zeitdauer für Schritt b) in Abhängigkeit der Temperatur des Abgases während der Effektivitätssteigerung bestimmt wird. Auch wenn bei dem hier vorgeschlagenen Verfahren eine Temperatur zur thermischen Regeneration der Partikel nicht erreicht wird, so ist dennoch der Einfluss der Temperatur des Abgases von erheblicher Bedeutung. Betrachtet man beispielsweise die Konvertierung von Ruß unter Einsatz von Stickstoffoxid, so sind beispielsweise Temperaturen von etwa 200 bis 230˚ mindestens bereitzustellen. Wird diese Temperatur im Laufe von Schritt b) zumindest kurzzeitig unterschritten, so ist in der Regel der Prozess der Effektivitätssteigerung zu verlängern. Gleichsam ist eine Reaktion im Bereich der vorstehend genannten Grenztemperatur noch nicht so umsatzfreudig bzw. dynamisch, wie beispielsweise bei Temperaturen von ca. 300 ˚C. Deshalb ist es vorteilhaft, die Zeitdauer für Schritt b) in Abhängigkeit der Temperatur des Abgases zu wählen. Die Temperatur des Abgases kann auf bekannte Art bestimmt werden, beispielsweise durch Integration mindestens eines Temperatursensors in der Abgasanlage der Verbrennungskraftmaschine und/oder in der Partikelfalle.

Nun wird für das erfindungsgemäße Verfahren auch vorgeschlagen, dass die Zeitdauer für Schritt b) in Abhängigkeit der Stiffstoffdioxid-Konzentration des Abgases während der Effektivitätssteigerung bestimmt wird. Das heißt mit anderen Worten, dass die Stickstoffdioxid-Konzentration des Abgases während Schritt b) berechnet bzw. überwacht wird und in Abhängigkeit dieser Stickstoffdioxid-Konzentration die Zeitdauer variiert. Damit kann bei hohen Stickstoffdioxid-Konzentrationen die Zeitdauer verkürzt werden, weil eine größere Anzahl von Reaktionspartnern für die Partikel bereitgestellt wird.

Weiter ist es für das erfindungsgemäße Verfahren vorteilhaft, dass die Zeitdauer für Schritt b) in Abhängigkeit der Wasser-Konzentration des Abgases während der Effektivitätssteigerung bestimmt wird. Damit ist unter anderem gemeint, dass die Wasser- bzw. WasserdampfKonzentration im Abgas überwacht bzw. bestimmt wird. Die Wasser-Konzentration hat einen beachtlichen Einfluss auch das Konvertierungsverhalten von Ruß, wobei mit zunehmender Wasser-Konzentration eine Erhöhung der Effektivität der Partikelfalle eintritt, was insbesondere in einem Bereich bis 5 % Wasser-Konzentration im Abgas zutrifft.

Gemäß noch einer weiteren Ausgestaltung des erfindungsgemäßen Verfahrens wird die Zeitdauer für Schritt b) in Abhängigkeit der Ozon-Konzentration des Abgases während der Effektivitätssteigerung bestimmt wird. Es hat sich gezeigt, dass gerade bei relativ niedrigen Temperaturen (z.B. bis ca. 300˚C), die Präsenz von Ozon einen ähnlichen Effekt auf die Rußumwandlung hat wie das Stickstoffdioxid. Damit ist es besonders vorteilhaft, (insbesondere bei Temperaturen bis 300˚C) eine erhöhte Ozon-Konzentration bereitzustellen. Gemäß einer weiteren Ausgestaltung des Verfahrens wird der mindestens eine Betriebsparameter der Verbrennungskraftmaschine während Schritt b) so eingestellt, dass das erzeugte Abgas eine Erhöhung der Stickstoffdioxid-Konzentration erfährt. Das bedeutet beispielsweise, dass motorseitig das Betriebskennfeld soweit geändert wird, dass beim produzierten Abgas eine erhöhte Stickstoffdioxid-Konzentration gegenüber dem Normalbetrieb vorliegt. Es ist jedoch alternativ oder kumulativ möglich, dass beispielsweise die Verbrennungskraftmaschine so betrieben wird, dass eine erhöhte Stickstoffmonoxid-Konzentration generiert wird, wobei dieses mit Stickstoffmonoxid (NO) angereicherte Abgas anschließend über einen Oxidationskatalysator geführt wird, so dass sich mit dem im Abgas enthaltenen Sauerstoff ($O_2$) vermehrt Stickstoffdioxid ($NO_2$) bildet. Weiter ist auch denkbar, dass unter der hier beschriebenen Zielsetzung eine Abgasrückführung entsprechend angepasst wird.

Gemäß einem weiteren Vorschlag wird der mindestens eine Betriebsparameter der Verbrennungskraftmaschine während Schritt b) so eingestellt, dass das erzeugte Abgas eine Erhöhung der Sauerstoff-Konzentration erfährt. Die Präsenz von Sauerstoff hat maßgeblichen Einfluss auf das Umsetzungsverhalten von Ruß bzw. der Konvertierung von Stickstoffmonoxid hin zu Stickstoffdioxid. Aus diesem Grund ist es vorteilhaft, möglichst viel Sauerstoff bereitzustellen. Bei Abgasanlagen, die eine Abgasrückführung umfassen, ist der Anteil des rückgeführten Abgases vorteilhafter Weise möglichst gering zu halten, so dass während Schritt b) eine über dem Normalbetrieb erhöhte Sauerstoff-Konzentration vorliegt.

An dieser Stelle sei darauf hingewiesen, dass es auch möglich ist, die Verbrennungskraftmaschine unter Umständen so zu betreiben, dass ein Wasseranteil bis 5% und/oder ein erhöhter Ozonanteil vorliegt.

Gemäß noch einer weiteren Ausgestaltung des Verfahrens wird der mindestens eine Betriebsparameter der Verbrennungskraftmaschine während Schritt b) so eingestellt, dass das erzeugte Abgas im Bereich der Partikelfalle eine Temperatur-Erhöhung von höchstens 50 ˚C erfährt. Bevorzugt liegt die Temperatur-Erhöhung sogar noch deutlich unter diesem Wert, nämlich beispielsweise 20 ˚C. Damit wird veranschaulicht, dass hier eine hohe thermische Belastung der Partikelfalle vermieden wird. Im Hinblick auf die Konvertierung des Rußes mittels Stickstoffdioxid kann, gerade im Bereich der Grenztemperatur, bereits eine so geringe Temperatur-Erhöhung zu deutlich verbesserten Umsatzraten führen, was mit der gewünschten Effektivitätssteigerung der Partikelfalle einhergeht. Dabei ist die Temperatur-Erhöhung insbesondere dann vorteilhaft, wenn vor Einleitung des Schrittes b) eine Temperatur des Abgases im Bereich der Partikelfalle unterhalb der Temperatur für eine chemische Reaktion von Stickstoffdioxid mit Ruß liegt, also beispielsweise unterhalb von 230˚C. Herrscht im Bereich der Partikelfalle bereits eine Temperatur deutlich oberhalb dieser Grenztemperatur, sind bevorzugt andere spezifische Betriebsparameter der Verbrennungskraftmaschine anzupassen.

Die vorstehend genannten spezifischen Betriebsparameter der Verbrennungskraftmaschine lassen sich einfach durch eine entsprechende Anpassung des Kennfeldes der Verbrennungskraftmaschine mittels einer so genannten Motorsteuerung vornehmen.

Nun wird noch eine Vorrichtung zur Durchführung des oben beschriebenen Verfahrens vorgeschlagen, dass zumindest folgende Komponenten umfasst:

- ein Fahrzeug mit einer Verbrennungskraftmaschine und einer Abgasanlage,
- wobei die Verbrennungskraftmaschine mittels einer Motorsteuerung betrieben wird, und
- die Abgasanlage mindestens eine, insbesondere offene, Partikelfalle aufweist, wobei Mittel zur Bestimmung der Effektivität der mindestens einen Partikelfalle vorgesehen sind.

Bei dem Fahrzeug handelt es sich bevorzugt um ein flurgebundenes Kraftfahrzeug, beispielsweise einen Personen- oder Lastkraftwagen. Diese Fahrzeuge weisen üblicherweise einen Otto- oder Dieselmotor als Verbrennungskraftmaschine auf, wobei das dort erzeugte Abgas über (mindestens) eine Abgasanlage an die Umgebung abgegeben wird. Zum Betrieb solcher Verbrennungskraftmaschinen ist es üblich, eine Motorsteuerung zu verwenden, die beispielsweise die zugeführten Luft- bzw. Kraftstoffmengen, die Zündzeitpunkte des Kraftstoff-Luft-Gemisches, die in der Verbrennungskraftmaschine herrschenden Drücke und viele weitere spezifische Betriebsparameter in Abhängigkeit vom Lastzustand der Verbrennungskraftmaschine variiert. Dabei wird die Motorsteuerung bzw. der Betrieb der Verbrennungskraftmaschine im Normalbetrieb ausgehend von einem vorgegebenen Fahrzyklus bestimmt (z.B. dem so genannten NEFZ-Zyklus für Europa bzw. dem FTP-Zyklus für USA, die beide den Fachleuten auf diesem Gebiet bekannt sind), so dass die Motorsteuerung üblicherweise bei bestimmten Lastzuständen auch die gleichen Betriebsparameter in entsprechender Weise regelt.

Die Abgasanlage kann neben (mindestens) einer Partikelfalle auch weitere Komponenten zur Abgasbehandlung aufweisen, so zum Beispiel einen Oxidationskatalysator, Mischer, Additivzugaben, Filter, Adsorber, etc.. Zur Verwirklichung des eingangs beschriebenen Verfahrens sind von der Vorrichtung auch Mittel zur Bestimmung der Effektivität der mindestens einen Partikelfalle vorgesehen. Dabei kann es sich um ein Teil der Motorsteuerung, um separate Sensoren, oder ähnliches handeln. Für den Fall, dass die Mittel Teil der Motorsteuerung sind, so sind diese bevorzugt als Computerprogramm in die Motorsteuerung integriert. Dieses Computerprogramm bewirkt, dass während des Schritt b) eine Abweichung des Normalbetrieb der Verbrennungskraftmaschine vorgenommen wird, wobei der mindestens eine spezifische Betriebsparameter der Verbrennungskraftmaschine so eingestellt wird, dass eine Effektivitätssteigerung der Partikelfalle eintritt.

In diesem Zusammenhang ist es besonders vorteilhaft, wenn die Vorrichtung mit einer Abgasanlage ausgestattet ist, die eine Abgasrückführungsvorrichtung umfasst. Eine solche Abgasrückführungsvorrichtung ermöglicht auf relativ einfache Weise, dass spezifische Betriebsparameter der Verbrennungskraftmaschine so beeinflusst werden, dass die gewünschte Effektivitätssteigerung einsetzt. Dabei ist der zurückgeführte Abgasstrom bevorzugt von der Motorsteuerung variabel einstellbar.

Die Erfindung sowie das technische Umfeld werden nachfolgend anhand der Figuren näher erläutert. Es ist darauf hinzuweisen, dass die Figuren besonders bevorzugte Ausgestaltungen des Verfahrens bzw. der Vorrichtung gemäß der Erfindung zeigen, die Erfindung jedoch nicht darauf begrenzt ist. Insbesondere sind auch die mit Bezug auf die Diagramme veranschaulichten Größenverhältnisse regelmäßig nicht auf die Realität übertragbar. Es zeigen:

Fig. 1     ein Kraftfahrzeug mit einer Abgasanlage,

Fig. 2     ein Detail einer offenen Partikelfalle,

Fig. 3     eine weitere Detailansicht einer offenen Partikelfalle,

Fig. 4     schematisch den Effektivitätsverlauf einer Partikelfalle,

Fig. 5     schematisch die Variation eines spezifischen Betriebsparameters der Verbrennungskraftmaschine, und

Fig. 6     schematisch den Einfluss der Stickstoffdioxid-Konzentration auf die Ruß-Umsatzrate.

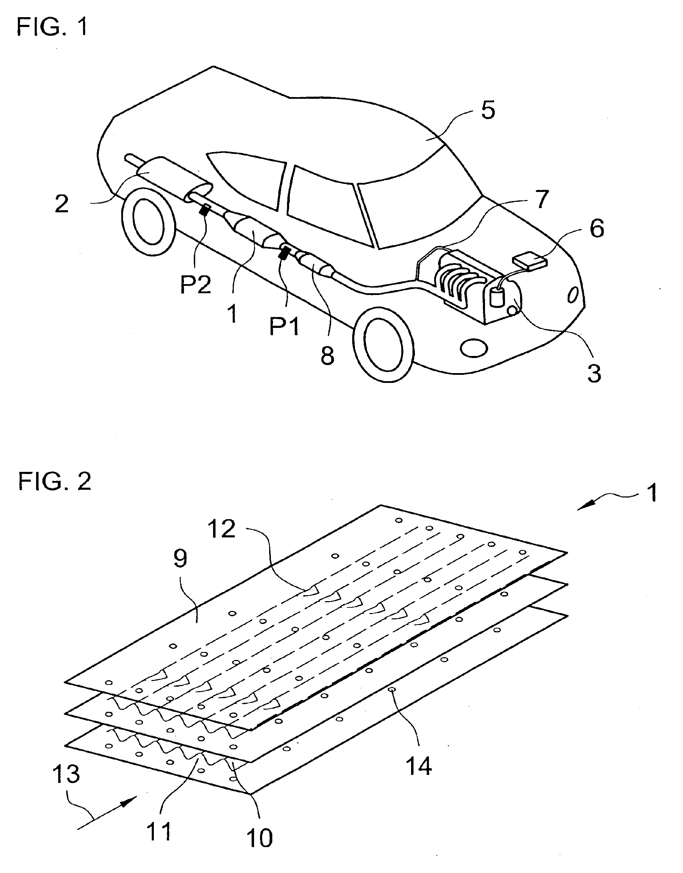

Fig. 1 zeigt schematisch und in einer perspektivischen Darstellung ein Fahrzeug 5 mit einer Verbrennungskraftmaschine 3. Das von der Verbrennungskraftmaschine 3 erzeugte Abgas strömt über eine Abgasanlage 2 in die Umgebung, wobei es innerhalb der Abgasanlage 2 zuvor hinsichtlich der darin befindlichen Schadstoffe behandelt wird. Der Betrieb der Verbrennungskraftmaschine 3 erfolgt mittels einer Motorsteuerung 6. Diese regelt beispielsweise neben dem Zündverhalten der Verbrennungskraftmaschine auch den Anteil des Abgases, der über die Abgasrückführungseinrichtung 7 der Verbrennungskraftmaschine 3 zurückgeführt wird. In der Abgasanlage 2 trifft das Abgas zunächst auf einen Katalysator 8, beispielsweise einen Katalysator 8, der zur Bildung von Stickstoffdioxid geeignet ist (Oxidationskatalysator). Das mit Stickstoffdioxid angereicherte Abgas strömt nun weiter hin zur Partikelfalle 1. Die Abgasanlage 2 ist mit (nicht dargestellten) Drucksensoren an einer ersten Position P1 und einer zweiten Position P2 ausgestattet, so dass die Druckdifferenz über die Partikelfalle 1 bestimmbar ist. Die mit den Sensoren des Abgassystems gewonnenen Messwerte, werden bevorzugt der Motorsteuerung 6 zur Verfügung gestellt. Die Druckdifferenz kann z.B. als Maß für die Effektivität der Partikelfalle 4 herangezogen werden.

Fig. 2 zeigt schematisch den Aufbau einer Ausführungsvariante einer offenen Partikelfalle 1. Die Partikelfalle 1 weist eine Vielzahl von Kanälen 11 auf, die im Wesentlichen parallel zueinander angeordnet sind. Die Kanäle 11 werden mit einer abwechselnden Anordnung mindestens einer Glattlage 9 und mindestens einer Welllage 10 gebildet. Die Glattlage 9 und die Welllage 10 können anschließend miteinander auch verbunden bzw. aufgewickelt werden und so die Partikelfalle 1 bilden. Bevorzugt ist dabei die Glattlage 9 aus einem Filtermaterial, beispielsweise aus einem metallischen Faservlies. Um eine Ablenkung des zu reinigenden Abgases im Inneren der Kanäle 11 hin zu diesem Filtermaterial zu bewirken, sind sich in die Kanäle 11 hinein erstreckende Vorsprünge 12 vorgesehen (hier nur in den Welllagen 10, was jedoch nicht zwingend der Fall sein muss). Dabei verschließen diese Vorsprünge 12 die den Kanal 11 teilweise, es ist jedoch für das Abgas auch ein Vorbeiströmen ermöglichen. Das Abgas strömt nun in Durchströmungsrichtung 13 in die Kanäle 11, wobei es zumindest an einigen Stellen durch die Vorsprünge 12 hin zu der aus Filtermaterial bestehenden Glattlage 9 gelenkt wird. Bei Kontakt des Abgases mit der Filtermaterial umfassenden Glattlage 9 werden die Ruß-Partikel eingelagert bzw. aufgehalten, so dass nun eine Konvertierung mit dem im Abgas enthaltenen Stickstoffdioxid stattfinden kann. Zur Verbesserung des Strömungsaustausches in benachbarten Kanälen 11 können die Glattlage 9 und/oder die Welllage 10 mit Öffnungen 14 versehen sein.

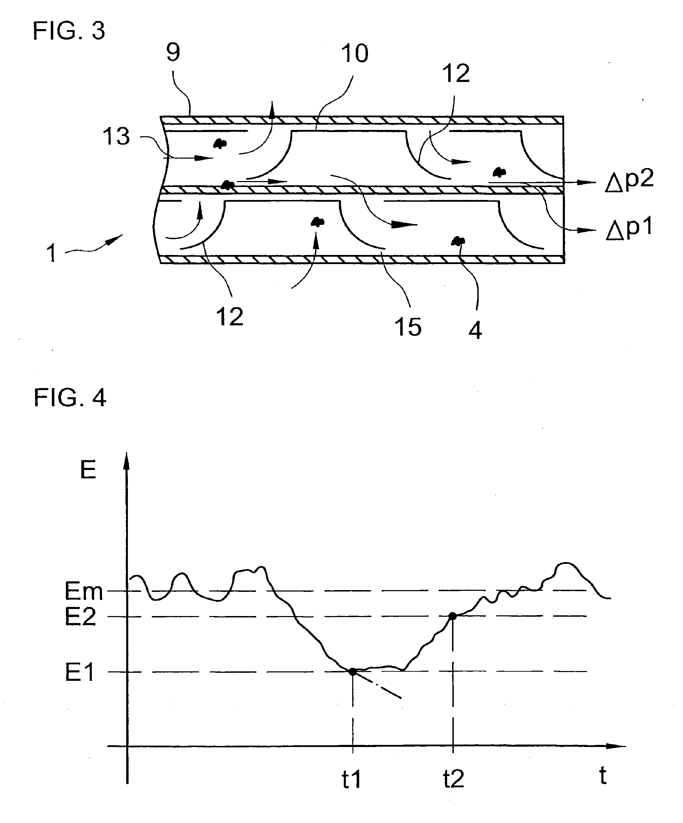

Fig. 3 zeigt nun benachbarte Kanäle 11 einer Partikelfalle 1 im Detail, wobei die Strömungsrichtung 13 des Abgases bzw. das Strömungsverhalten im Inneren der Partikelfalle 1 veranschaulicht werden soll. Die Glattlage 9 ist hier schraffiert dargestellt und soll ein Filtermaterial umfassen. Die Welllage 10 ist beispielsweise mit einer Metallfolie gebildet, die eine Vielzahl von Vorsprüngen 12 aufweist, z.B. indem Teilbereiche der Metallfolie in den Kanal 11 hinein gedrückt bzw. Leitflügel aus der Metallfolie ausgestanzt sind. Dabei sind die Vorsprünge 12 so gestaltet, dass eine Umgehung 15 für das anströmende Abgas vorgesehen ist. Die Orientierung der Vorsprünge 12 kann auf den jeweiligen Anwendungsfall abgestimmt sein. Grundsätzlich sind bei der Gestaltung der Partikelfalle 1 Materialien einzusetzen, die hochtemperatur- und korrosionsbeständig sind.

Das die Partikel 4 enthaltende Abgas wird (wie dies mit Pfeilen angedeutet ist) jeweils durch die Umgehung 15 oder die das Filtermaterial umfassende Glattlage 9 gezwungen. Im rechten Teil der Fig. 3 sind die hierzu erforderlichen Strömungswiderstände durch eine Druckdifferenz veranschaulicht. Beim Durchströmen der Umgehung 15 erfährt der Teilabgasstrom eine Bypass-Druckänderung $\Delta p2$. Beim Durchströmen der das Filtermaterial umfassenden Glattlage 9 ist ein eine Filter-Druckänderung $\Delta p1$ festzustellen. Bei einer zunehmenden Beladung des Filtermaterials kommt es nun dazu, dass der Wert $\Delta p1$ ansteigt, wobei die Neigung der Teilabgasströme erhöht wird, nicht die Glattlage 9 sondern die Umgehung 15 zu strömen. Damit ist ein Effektivitätsabfall verbunden, der durch das erfindungsgemäße Verfahren zumindest deutlich eingeschränkt werden kann.

Fig. 4 zeigt einmal schematisch den Verlauf der Effektivität E einer offenen Partikelfalle. Die Effektivität E der Partikelfalle wird bei für die Umsetzung von Ruß ausreichenden Bedingungen um einen mittleren Effektivitätswert Em pendeln. Gerade jedoch bei Stadtfahrten kommt es aufgrund der geringen Abgastemperatur und der verstärkten Rußbildung zu einer vermehrten Einlagerung von Ruß-Partikeln in das Filtermaterial, so dass ein Durchströmen des Abgases zunehmend behindert wird. Damit fällt die Effektivität E der Partikelfalle ab. Beim Erreichen eines ersten Zeitpunktes t1 der Partikelfalle, bei dem ein erster Effektivitätsgrenzwert E1 erreicht bzw. unterschritten wird, wird eine Effektivitätssteigerung der Partikelfalle durchgeführt. In Fig. 4 ist der "normale" Verlauf der Effektivität E ohne das erfindungsgemäße Eingreifen mit einer Linie umfassend Punkte und Striche veranschaulicht. Nach Aktivierung der erfindungsgemäßen Effektivitätssteigerung wird jedoch die Effektivität E der Partikelfalle zunächst gehalten und kann schließlich sogar bis auf einen zweiten Effektivitätsgrenzwert E2 angehoben werden. Beim Erreichen des zweiten Effektivitätsgrenzwertes E2 zu einem zweiten Zeitpunkt t2 wird wieder der Normalbetrieb der Verbrennungskraftmaschine aktiviert und die Effektivität E der Partikelfalle pendelt sich um den mittleren Effektivitätswert Em ein.

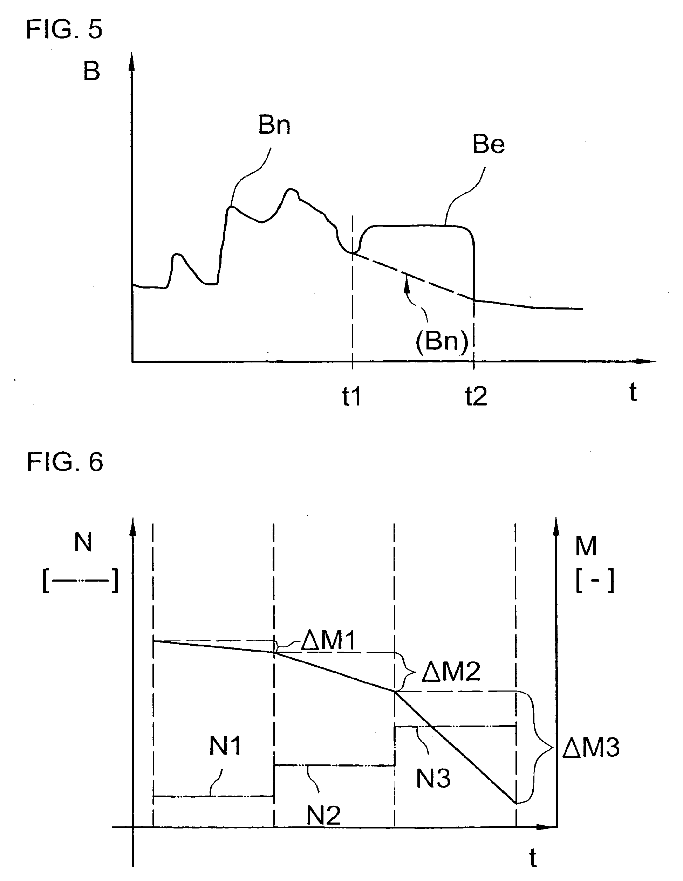

Fig. 5 veranschaulicht ebenfalls schematisch den Verlauf eines Betriebsparameters B während des Normalbetriebes (Bn) über die Zeit t. Zum Zeitpunkt t1, also wenn mit der Effektivitätssteigerung begonnen wird, folgt eine Änderung des Betriebsparameters B (vgl. Verlauf Be). Nachdem der zweite Effektivitätsgrenzwert E2 zum zweiten Zeitpunkt t2 erreicht ist, wird wieder der Normalbetrieb der Verbrennungskraftmaschine aktiviert. Es ist darauf hinzuweisen, dass der Verlauf gemäß Be nicht konstant sein muss, dieser kann auch während der Effektivitätssteigerung einen variierenden Wert umfassen. Außerdem ist diese schematische Veranschaulichung eines spezifischen Betriebsparameters B nicht in der Weise zu verstehen, dass stets nur ein Betriebsparameter B verändert wird. Vielmehr ist möglich, mehrere Betriebsparameter B gleichzeitig und/oder zeitlich versetzt zueinander für eine Effektivitätssteigerung der Partikelfalle anzupassen.

Fig. 6 veranschaulicht schematisch den Einfluss der Stickstoffdioxid-Konzentration N auf die umgesetzte Partikelmasse M in gleichen Zeitintervallen. Daraus ist erkennbar, dass mit Anhebung des Wertes der Stickstoffdioxid-Konzentration (siehe N1, N2, N3) die Menge an umgesetzten Partikeln zunimmt (siehe $\Delta M1$, $\Delta M2$, $\Delta M3$). Diese Auswirkung wird bei der Effektivitätssteigerung ausgenutzt, so dass z.B. bei einer hohen Beladung, also einer großen Menge in der Partikelfalle eingelagerter Ruß-Partikel, die Stickstoffdioxid-Bereitstellung so gewählt werden kann, dass in einem vorgegebenen Zeitintervall, mit einer bestimmten Einstellung der Abgasrückführung, etc. die Partikelfalle von eingelagerten Ruß-Partikeln befreit wird.

Mit dem hier beschriebenen Verfahren und der dazugehörigen Vorrichtung kann ein kraftstoffsparender und materialschonender Betrieb einer Abgasanlage einer Verbrennungskraftmaschine bei gleichzeitig hoher Effektivität der in der Abgasanlage integrierten Partikelfalle gewährleistet werden.

Bezugszeichenliste

| | |
|---|---|
| 1 | Partikelfalle |
| 2 | Abgasanlage |
| 3 | Verbrennungskraftmaschine |
| 4 | Partikel |
| 5 | Fahrzeug |
| 6 | Motorsteuerung |
| 7 | Abgasrückführungsvorrichtung |
| 8 | Katalysator |
| 9 | Glattlage |
| 10 | Welllage |
| 11 | Kanal |
| 12 | Vorsprung |
| 13 | Strömungsrichtung |
| 14 | Öffnung |
| 15 | Umgehung |

| | |
|---|---|
| B | Betriebsparameter |
| Bn | Betriebsparameter im Normalbetrieb |
| Be | Betriebsparameter währen der Effektivitätssteigerung |
| E | Effektivität |
| E1 | erster Effektivitätsgrenzwert |
| E2 | zweiter Effektivitätsgrenzwert |
| Em | mittlerer Effektivitätsgrenzwert |
| M | Partikelmasse |
| N | Stickstoffdioxidkonzentration |
| P1 | erste Position |
| P2 | zweite Position |
| t | Zeit |
| t1 | erster Zeitpunkt |
| t2 | zweiter Zeitpunkt |
| $\Delta p1$ | Filter-Druckänderung |
| $\Delta p2$ | Bypass-Druckänderung |

**Patentansprüche**

1. Verfahren zum Betrieb einer, insbesondere offenen, Partikelfalle (1) in einer Abgasanlage (2) einer Verbrennungskraftmaschine (3), wobei die Partikelfalle (1) eine hinsichtlich der Reinigung eines Abgases aufweist, die sich aus dem Verhältnis aus aufgehaltenen Partikeln zu eintretenden Partikeln ergibt, umfassend zumindest die folgenden Schritte:

   a) Bestimmung eines ersten Zeitpunktes (t1) der Partikelfalle (1), bei dem die Effektivität (E) der Partikelfalle (1) einen ersten Effektivitätsgrenzwert (E1) unterschreitet,
   b) Durchführen einer Effektivitätssteigerung der Partikelfalle (1) durch Einstellen mindestens eines spezifischen Betriebsparameters (B) der Verbrennungskraftmaschine (3), wobei das von der Verbrennungskraftmaschine (3) erzeugte Abgases im Bereich der Partikelfalle (1) eine so niedrige Temperatur hat, dass im Wesentlichen keine thermische Regeneration der Partikel (4) stattfindet,
   c) Bestimmung eines zweiten Zeitpunktes (t2) der Partikelfalle (1), bei dem die Effektivität (E) der Partikelfalle (1) einen zweiten Effektivitätsgrenzwert (E2) überschreitet, und

d) Aktivieren eines Normalbetriebs der Verbrennungskraftmaschine (3), wobei die Zeitdauer für Schritt b) bestimmt wird in Abhängigkeit von zumindest einem Parameter aus der Gruppe:

- der Temperatur des Abgases während der Effektivitätssteigerung,
- der Stickstoffdioxid-Konzentration des Abgases während der Effektivitätssteigerung,
- der Wasser-Konzentration des Abgases während der Effektivitätssteigerung,
- der Ozon-Konzentration des Abgases während der Effektivitätssteigerung.

2. Verfahren nach Anspruch 1, bei dem Schritt a) die Bestimmung eines aktuellen Beladungszustandes der Partikelfalle (1) mit Partikeln (4) umfasst.

3. Verfahren nach Anspruch 2, bei dem der aktuelle Beladungszustand berechnet wird.

4. Verfahren nach Anspruch 2 oder 3, bei dem der aktuelle Beladungszustand anhand einer Druckdifferenz in der Abgasanlage (2) zwischen einer ersten Position (P1) vor der Partikelfalle (1) und einer zweiten Position (P2) nach der Partikelfalle (1) ermittelt wird.

5. Verfahren nach einem der vorhergehenden Ansprüche, bei dem eine Effektivität der Partikelfalle (1) hinsichtlich im Abgas enthaltener Partikel (4) während Schritt b) gegenüber einem Normalbetrieb der Verbrennungskraftmaschine (3) um mindestens 20 % gesteigert wird.

6. Verfahren nach einem der vorhergehenden Ansprüche, bei dem die Zeitdauer für Schritt b) in Abhängigkeit von dem zugrunde liegenden Beladungszustand bestimmt wird.

7. Verfahren nach einem der vorhergehenden Ansprüche, bei dem der mindestens eine Betriebsparameter (B) der Verbrennungskraftmaschine (3) während Schritt b) so eingestellt wird, dass das erzeugte Abgas eine Erhöhung der Stickstoffdioxid-Konzentration erfährt.

8. Verfahren nach einem der vorhergehenden Ansprüche, bei dem der mindestens eine Betriebsparameter (B) der Verbrennungskraftmaschine (3) während Schritt b) so eingestellt wird, dass das erzeugte Abgas eine Erhöhung der Sauerstoff-Konzentration erfährt.

9. Verfahren nach einem der vorhergehenden Ansprüche, bei dem der mindestens eine Betriebsparameter (B) der Verbrennungskraftmaschine (3) während Schritt b) so eingestellt wird, dass das erzeugte Abgas im Bereich der Partikelfalle (1) eine Temperatur-Erhöhung von höchstens 50°C erfährt.

10. Vorrichtung zur Durchführung des Verfahrens nach einem der vorhergehenden Ansprüche, umfassend zumindest:

- ein Fahrzeug (5) mit einer Verbrennungskraftmaschine (3) und einer Abgasanlage (2),
- wobei die Verbrennungskraftmaschine (3) mittels einer Motorsteuerung (6) betrieben wird, und
- die Abgasanlage (2) mindestens eine, insbesondere offene, Partikelfalle (1) aufweist,

**dadurch gekennzeichnet, dass** Mittel zur Bestimmung der Effektivität, die sich aus dem Verhältnis aus aufgehaltenen Partikeln zu eintredenden Partikeln ergibt, der mindestens einen Partikelfalle (1) vorgesehen sind und dass durch die Motorsteuerung (6) der mindestens eine spezifische Betriebsparameter (3) so eingestellt wird, dass eine Effektivitätssteigerung der Partikelfalle (1) eintritt.

11. Vorrichtung nach Anspruch 10, **dadurch gekennzeichnet, dass** die Abgasanlage (2) eine Abgasrückführungsvorrichtung (7) umfasst.

## Claims

1. Method for operating a, in particular open, particle trap (1) in an exhaust-gas system (2) of a combustion engine (3), wherein the particle trap (1) has a effectiveness (E) with regard to the purification of an exhaust gas, which results from the ratio between caught particles and entering particles, comprising at least the following steps:

a) identification of a first time (t1) of the particle trap (1) in which the effectiveness (E) of the particle trap (1) falls below a first limiting value of the effectiveness (E1),

b) executing an increasing of the effectiveness of the particle trap (1) by adjusting at least one specific operating parameter (B) of the combustion engine (3), wherein the exhaust gas of the combustion engine (3) has such a low temperature in the area of the particle trap (1) that substantially no thermal regeneration of the particles (4) occurs,

c) identification of a second time (t2) of the particle trap (1) in which the effectiveness (E) of the particle trap (1) exceeds a second limiting value of the effectiveness (E2) and

d) activating a normal operating mode of the combustion engine (3), wherein in the duration of step b) is determined dependent on at least one parameter of the group:

- the temperature of the exhaust gas during the increasing of the effectiveness,
- the concentration of nitrogen in the exhaust gas during the increasing of the effectiveness,
- the concentration of water in the exhaust gas during the increasing of the effectiveness,
- the concentration of ozone of the exhaust gas during the increasing of the effectiveness.

2. Method according to claim 1, wherein step a) includes the determination of a current loading condition of the particle trap (1) with particles (4).

3. Method according to claim 2, wherein the current loading condition is calculated.

4. Method according to claim 2 or 3, wherein the current loading condition is determined by a pressure difference in the exhaust-gas-system (2) between a first position (P1) in front of the particle trap (1) and a second position (P2) after the particle trap (1).

5. Method according to one of the preceding claims, wherein the effectiveness of the particle trap (1) regarding the particles (4) contained in the exhaust gas is increased during step b) at least 20 % compared to a normal operating mode of the combustion engine (3).

6. Method according to one of the preceding claims, wherein the duration of step b) is determined dependent on the loading condition.

7. Method according to one of the preceding claims, wherein the at least one operating parameter (B) of the combustion engine (3) is adjusted in step b) in that the concentration of nitrogen in the produced exhaust gas is increased.

8. Method according to one of the preceding claims, wherein the at least one operating parameter (B) of the combustion engine (3) is adjusted in step b) in that the concentration of oxygen in the produced exhaust gas is increased.

9. Method according to one of the preceding claims, wherein the at least one operating parameter (B) of the combustion engine (3) is adjusted in step b) in that the temperature of the produced exhaust gas in the area of the particle trap (1) is increased not more than 50 ˚C.

10. Apparatus for executing the method according to one of the preceding claims, comprising at least:

- a vehicle (5) with a combustion engine (3) and an exhaust-gas system (2),
- wherein the combustion engine (3) is operated by an engine control system (6), and
- the exhaust-gas system (2) comprises at least one, in particular open, particle trap (1),

**characterised in that** means for determining the effectiveness, which results from the ratio between the caught particles and the entering particles, of at least one particle trap (1) are provided and **in that** at least one specific operating parameter (3) is adjusted by the engine control system (6) such that the effectiveness of the particle trap (1) is increased.

11. Apparatus according to claim 10, **characterised in that** the exhaust-gas system (2) comprises an exhaust-gas recirculation system (7).

**EP 1 893 853 B1**

**Revendications**

1. Procédé destiné à opérer un piège à particules (1), notamment ouvert, dans un système de gaz d'échappement (2) d'une machine à combustion interne (3), le piège à particules (1) présentant une efficacité (E) quant à l'épuration d'un gaz d'échappement laquelle résulte du rapport entre des particules retenues et des particules qui entrent, comprenant au moins les étapes suivantes :

   a) déterminer un premier moment (t1) du piège à particules (1), dans le cas duquel l'efficacité E du piège à particules (1) est inférieure à une première valeur limite d'efficacité (E1),
   b) effectuer une augmentation d'efficacité du piège à particules (1) en ajustant au moins un paramètre d'opération spécifique (B) de la machine à combustion interne (3), le gaz d'échappement généré par la machine à combustion interne (3) ayant une température aussi basse dans la région du piège à particules (1), que sensiblement aucune régénération thermique des particules (4) n'a lieu.
   c) déterminer un deuxième moment (t2) du piège à particules (1), dans le cas duquel l'efficacité du piège à particules (1) dépasse une deuxième valeur limite d'efficacité (E2) et
   d) activer une opération normale de la machine à combustion interne (3), la durée pour l'étape b) étant déterminée en fonction d'au moins un paramètre du groupe :

   - de température du gaz d'échappement durant l'augmentation d'efficacité,
   - de concentration de dioxyde d'azote du gaz d'échappement durant l'augmentation d'efficacité,
   - de concentration d'eau du gaz d'échappement durant l'augmentation d'efficacité,
   - de concentration d'ozone du gaz d'échappement durant l'augmentation d'efficacité.

2. Procédé selon la revendication 1, dans lequel l'étape a) comprend la détermination d'un état de charge actuel du piège à particules (1) avec des particules (4).

3. Procédé selon la revendication 2, dans lequel l'état de charge actuel est calculé.

4. Procédé selon la revendication 2 ou 3, dans lequel l'état de charge actuel est déterminé à l'aide d'une différence de pression dans le système de gaz d'échappement (2) entre une première position (P1) en amont du piège à particules (1) et une deuxième position (P2) en aval du piège à particules (1).

5. Procédé selon l'une des revendications précédentes, dans lequel une efficacité du piège à particules (1) quant à des particules (4) se trouvant dans le gaz d'échappement est augmentée d'au moins 20 % durant l'étape b) par rapport à une opération normale de la machine à combustion interne (3).

6. Procédé selon l'une des revendications précédentes, dans lequel la durée pour l'étape b) est déterminée en fonction de l'état de charge qui est à la base.

7. Procédé selon l'une des revendications précédentes dans lequel l'au moins un paramètre d'opération (B) de la machine à combustion interne (3) est ajusté de manière telle durant l'étape b), que le gaz d'échappement généré est soumis à une augmentation de la concentration de dioxyde d'azote.

8. Procédé selon l'une des revendications précédentes, dans lequel l'au moins un paramètre d'opération (B) de la machine à combustion interne (3) est ajusté de manière telle durant l'étape b) que le gaz d'échappement généré est soumis à une augmentation de la concentration d'oxygène.

9. Procédé selon l'une des revendications précédentes, dans lequel l'au moins un paramètre d'opération (B) de la machine à combustion interne (3) est ajusté de manière telle durant l'étape b) que dans la région du piège à particules (1) le gaz d'échappement généré est soumis à une augmentation de température d'au maximum 50 ˚C.

10. Dispositif pour la mise en oeuvre du procédé selon l'une des revendications précédentes, comprenant au moins :

   - un véhicule (5) avec une machine à combustion interne (3) et un système de gaz d'échappement (2),
   - dans le cas duquel la machine à combustion interne (3) est opérée au moyen d'un contrôle de moteur (6), et
   - le système de gaz d'échappement (2) a au moins un piège à particules (1), qui est notamment ouvert,

   **caractérisé en ce que** des moyens sont prévus pour déterminer l'efficacité de l'au moins un piège à particules (1),

**EP 1 893 853 B1**

qui résulte du rapport entre les particules retenues et les particules qui entrent, et **en ce que** grâce au contrôle de moteur (6) l'au moins un paramètre d'opération spécifique (3) est ajusté de telle manière qu'une augmentation de l'efficacité du piège à particules (1) se produit.

11. Dispositif selon la revendication 10, **caractérisé en ce que** le système de gaz d'échappement (2) comprend un dispositif de recirculation des gaz d'échappement (7).

FIG. 1

FIG. 2

FIG. 3

FIG. 4

EP 1 893 853 B1

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20117873
- US 20030106309 A1
- EP 1512860 A